# FASCICULE DE BREVET EUROPEEN

(11) **EP 1 738 817 B1**
(45) Date de publication et mention de la délivrance du brevet: **06.10.2010**
(21) Numéro de dépôt: 06291065.8
(22) Date de dépôt: 27.06.2006
(51) Int. Cl.: B01D 53/32, B01D 53/86, F24C 15/20

(54) **Dispositif de traitement de gaz par catalyse, notamment pour hotte de filtration**
Vorrichtung zur Gasbehandlung durch Katalyse, insbesondere für eine Abzugshaube
Device for gas treatment, in particular for filtering hoods

(30) Priorité: 28.06.2005 FR 0506579
(43) Date de publication de la demande: 03.01.2007
(73) Titulaire: FAGORBRANDT SAS, 92500 Rueil Malmaison (FR)
(72) Inventeur: Chevrier, Jean-Paul, 45590 St Cyr en Val (FR); Tatibouet, Jean-Michel, 86000 Poitiers (FR)
(74) Mandataire: Stankoff, Hélène

(56) Documents cités:
- DE-A1- 19 534 950
- FR-A- 2 818 558
- FR-A- 2 849 395
- US-A1- 2001 042 372

## Description

La présente invention concerne un dispositif de traitement de gaz par catalyse.

Elle concerne également une hotte de filtration des fumées de cuisson.

L'invention s'inscrit de manière générale dans le domaine du traitement des gaz, notamment en vue de leur recyclage, dans des hottes filtrantes de fumées de cuisson.

En effet, lors de la cuisson des aliments, les fumées et gaz de cuisson contiennent de nombreuses particules en suspension, grasses et/ou odorantes, qu'il est nécessaire de pouvoir traiter efficacement, notamment lorsque la hotte de filtration est du type à recyclage et que les gaz et fumées sont rejetés après traitement dans l'air ambiant de la pièce.

On connaît à cet égard des dispositifs de traitement de gaz par catalyse comprenant un support catalytique traversé par le flux gazeux à traiter. Le phénomène de catalyse est activé grâce à la génération d'un plasma de décharge dans le support catalytique. L'utilisation d'un plasma de décharge permet notamment d'abaisser la température à laquelle les réactions catalytiques sont efficaces pour détruire les composés organiques volatils.

Un tel dispositif de traitement de gaz est décrit notamment dans le document EP 1 086 740.

On connait également dans les documents FR 2 849 395 et FR 2 812 558 des dispositifs de traitement de gaz dans lesquels un plasma est généré dans le support catalytique.

Cependant, pour produire le plasma à travers le support catalytique, les électrodes de génération du plasma doivent être placées de part et d'autre du support catalytique. Une distance minimum est ainsi imposée entre les électrodes, de l'ordre de 90 mm, ce qui nécessite une tension importante pour générer le plasma de décharge dans le support catalytique.

La présente invention a pour but de résoudre les inconvénients précités et de proposer un dispositif de traitement de gaz par catalyse ayant des performances techniques améliorées.

La présente invention vise ainsi un traitement de gaz par catalyse comprenant au moins un support catalytique adapté à être traversé par un flux gazeux et de génération d'un plasma de décharge des électrodes.

Selon l'invention, une zone de génération de plasma comporte une première série d'électrodes rectilignes et une seconde série d'électrodes rectilignes de polarité opposée, disposées alternativement dans la zone de génération de plasma, la zone de génération de plasma étant disposée en amont du support catalytique suivant le sens du flux gazeux et adjacente au support catalytique.

Ainsi, le plasma n'est plus généré directement dans le support catalytique. Le dispositif de traitement conforme à l'invention ne présente plus de contraintes de dimensionnement pour la génération du plasma liées aux dimensions du support catalytique.

Grâce à la zone de génération de plasma disposée directement en amont du support catalytique, une partie des espèces créées dans le plasma sont entraînées par le flux gazeux dans le support catalytique, permettant ainsi d'activer le rôle du catalyseur et d'oxyder les molécules odorantes (Composés Organiques Volatils) qui y sont adsorbées.

Grâce à ces séries d'électrodes disposées alternativement, de polarité opposée, il est possible de disposer les électrodes à faible distance les unes des autres afin de générer efficacement un plasma sans requérir une tension d'alimentation des électrodes trop élevée.

Afin d'obtenir un plasma uniformément réparti dans l'air, les électrodes de chaque série sont de préférence équidistantes les unes des autres.

A titre d'exemple pratique, la distance entre deux électrodes de polarité opposée est comprise entre 3 et 5 mm, et de préférence sensiblement égale à 4 mm.

Il est ainsi possible d'alimenter les électrodes de génération de plasma avec une tension inférieure à 20 kV. Cette tension permet de réduire les contraintes liées au contournement électrique et les risques de court circuit.

En pratique, afin d'assurer un traitement efficace des fumées, le dispositif de traitement comprend plusieurs supports catalytiques disposés successivement suivant le sens du flux gazeux. De préférence, il comprend plusieurs zones de génération de plasma disposées respectivement en amont de plusieurs supports catalytiques.

Il est possible en outre, en modifiant l'épaisseur de chaque support catalytique et la nature du catalyseur, de traiter efficacement les gaz, et par exemple les fumées de cuisson, les composés organiques volatils ou les odeurs, tout au long de leur traversée du dispositif de traitement.

La présente invention trouve notamment une application dans une hotte de filtration de fumées de cuisson, telle qu'une hotte de filtration domestique.

D'autres particularités et avantages de l'invention apparaîtront encore dans la description ci-après.

Aux dessins annexés, donnés à titre d'exemples non limitatifs :
- la figure 1 est une vue en coupe longitudinale d'un dispositif de traitement conforme à un mode de réalisation de l'invention ; et
- la figure 2 est une vue en section transversale du dispositif de traitement de la figure 1.

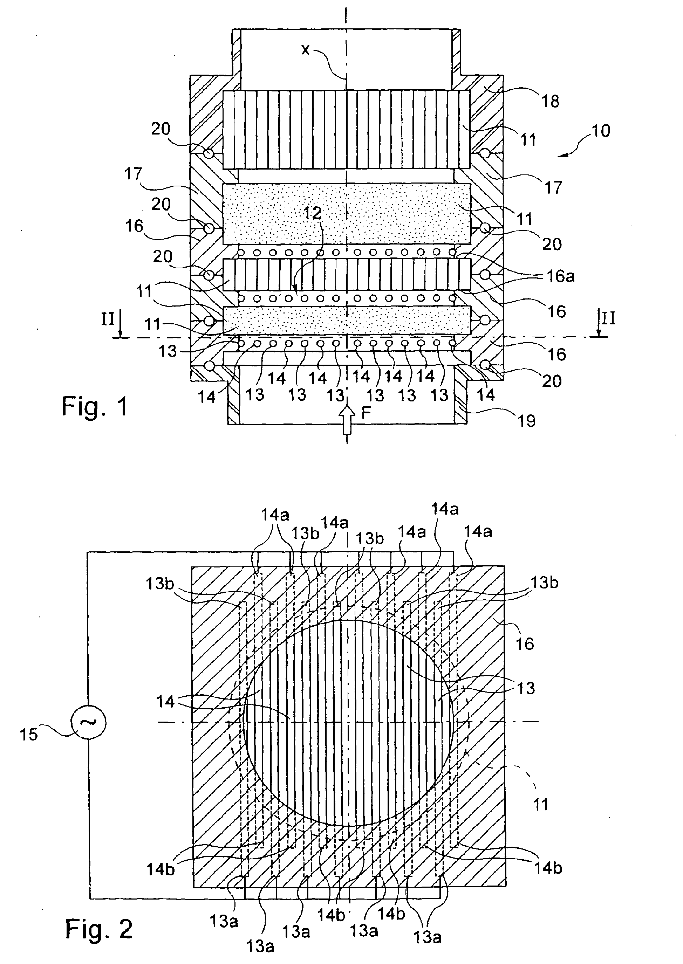

On va décrire en référence aux figures 1 et 2 un dispositif de traitement utilisant la combinaison du plasma et de la catalyse conforme à un mode de réalisation de l'invention.

Le dispositif de traitement de gaz 10 illustré à la figure 1 comprend quatre supports catalytiques 11 disposés successivement suivant le sens de circulation d'un flux gazeux, illustré par la flèche F.

Comme illustré sur la figure 1, la direction du flux gazeux correspond à un axe X qui peut correspondre à un axe vertical lorsque le dispositif de traitement est mis en oeuvre dans une hotte de filtration de fumées de cuisson.

Bien entendu, le nombre de supports catalytiques 11 disposés dans le dispositif de traitement n'est nullement limitatif et peut être supérieur ou inférieur à 4, voire égal à 1.

De préférence chaque catalyseur 11 est formé d'un bloc d'une seule pièce adapté à être traversé par le flux gazeux F.

Ce support catalytique monolithique 11 peut être par exemple réalisé en céramique, telle que de la cordiérite, et présenter une structure alvéolée de type nids d'abeille, ménageant ainsi des passages pour le flux gazeux. Le support peut également être réalisé en mousse de céramique suffisamment poreuse pour permettre le passage du flux gazeux F. II peut aussi être sous forme de tissu, tel qu'en matériau fibreux.

On notera à cet égard que les supports catalytiques 11 utilisés dans le dispositif de traitement 10 peuvent être différents les uns des autres.

Bien entendu, n'importe quel autre matériau traversé par des canaux ou des autres ouvertures autorisant le passage des gaz et capable de supporter une phase active pour la catalyse peut convenir pour réaliser un support catalytique 11.

Des particules actives de traitement sont déposées sur le support catalytique de manière à former différents sites de catalyse.

Ces particules actives de traitement peuvent être constituées de métaux nobles nanodispersés du type platine, palladium, rhodium ou ruthénium, ou être constituées d'autres métaux tels que de l'or, de l'argent ou de l'iridium associés à un ou plusieurs oxydes métalliques, réductibles ou non tels que Al₂ O₃, Mn O₂, Fe₂ O₃, TiO₂, ZnO, SiO₂, ou des oxydes de terres rares.

Bien entendu, les particules actives peuvent contenir l'un de ces métaux ou une combinaison de deux ou plusieurs de ces métaux.

Ces métaux sont déposés sur le support catalytique 11 sous forme de petites particules très dispersées à la surface de ce support.

Le support lui-même 11 pourrait être réalisé dans une phase catalytique active, et par exemple être réalisé directement dans un oxyde métallique tel que l'oxyde de titane TiO₂ par exemple.

La nature du catalyseur peut être différente d'un support catalytique 11 à l'autre, entre l'entrée et la sortie du dispositif de traitement 10, suivant le but recherché dans le traitement.

En particulier, un support catalytique 11 peut être plus adapté pour le traitement des composés organiques volatils et un autre dédié à l'élimination de l'ozone.

En particulier, le dernier support catalytique 11 utilisé dans le dispositif de traitement 10 relativement au sens de circulation du flux gazeux F peut être dédié à éliminer l'ozone et garantir la destruction de l'ozone grâce à des sites de catalyse constitués par exemple d'oxyde de manganèse MnO₂.

En alternant ainsi des supports catalytiques différents en terme d'épaisseur et de phase active catalytique dans le dispositif de traitement 10, ce dernier peut traiter l'intégralité des gaz de cuisson circulant dans celui-ci.

L'épaisseur du support catalytique dans la direction X peut être adaptée au temps de passage du flux gazeux de telle sorte que la catalyse soit optimale. L'épaisseur peut être comprise typiquement entre 5 et 50 mm pour des matériaux à base de céramique ou entre 0,5 mm et quelques millimètres pour des matériaux fibreux. L'épaisseur peut être égale par exemple à 10 mm. En pratique, plus l'épaisseur du support catalytique 11 est importante, meilleurs seront le traitement de l'ozone et la purification de l'air.

Afin d'augmenter l'efficacité du traitement par catalyse, au moins un support catalytique 11 est associé à une zone de génération de plasma disposée directement en amont de ce support catalytique 11 suivant le sens du flux gazeux F. Le support catalytique 11 peut être au plus prêt, voire en contact avec des électrodes de génération de plasma.

Dans cet exemple de réalisation, trois zones de génération de plasma 12 sont disposées en amont et de manière adjacente respectivement à trois supports catalytiques 11 du dispositif de traitement 10.

Bien entendu, tous les supports catalytiques 11 pourraient être précédés directement d'une zone de génération de plasma 12, ou a contrario seul un support catalytique 11 pourrait être associé à une zone de génération de plasma directement adjacente.

Dans ce mode de réalisation dans lequel plusieurs zones de génération de plasma 12 sont associées respectivement à plusieurs supports catalytiques 11 disposés successivement dans le dispositif de traitement, au moins une zone de génération de plasma 12, et dans cet exemple de réalisation deux zones de génération de plasma 12, sont disposées entre deux supports catalytiques 11 successifs.

Dans ce mode de réalisation à quatre supports catalytiques 11, il est préférable que seuls les trois premiers supports catalytiques 11 soient associés à une zone de génération de plasma 12 directement adjacente, le dernier support catalytique 11 étant dédié comme indiqué précédemment à la destruction de l'ozone généré par le plasma et à la suppression des résidus de composés organiques volatils.

Chaque zone de génération de plasma 12 disposée ainsi en amont d'un support catalytique 11 est adaptée à générer de manière efficace un plasma sans être tributaire des dimensions du support catalytique adjacent.

De manière générale, le dispositif de traitement s'adapte par sa conception modulaire au traitement d'un flux gazeux particulier.

Ainsi, le dispositif de traitement peut comporter un nombre variable de supports catalytiques, de nature et d'épaisseur également variables, et revêtus d'un dépôt catalytique qui peut être également différent d'un support à l'autre.

En outre, le plasma en amont de chaque support catalytique peut être présent ou absent selon les dispositifs de traitement et le nombre de modules combinant traitement catalytique et plasma peut être variable.

En particulier, le nombre de modules plasma ― support catalytique peut être modifié en fonction de la nature des composés organiques volatils et des gaz à traiter, de l'efficacité de traitement recherché ainsi que du débit du système d'aspiration, correspondant à la vitesse de passage de l'air chargé de composés organiques volatils à traiter dans le dispositif de traitement.

On notera par ailleurs que pour une même efficacité de traitement plusieurs types de dispositif de traitement peuvent être utilisés.

Dans ce cas, une configuration moins coûteuse peut être privilégiée.

On donne ci-après deux exemples de configuration permettant d'obtenir un même taux de conversion des composés organiques volatils traités :

### Exemple 1

Dispositif de traitement comprenant successivement trois modules plasma - support catalytique, chaque support catalytique ayant une épaisseur de 6 mm et un dépôt constitué de Al₂ O₃ et Pt. Ces trois modules plasma - support catalytique sont suivis d'un module constitué uniquement d'un support catalytique sans plasma, d'épaisseur de 24 mm avec un dépôt de Al₂ O₃ et MnOx.

### Exemple 2

Dispositif de traitement comprenant successivement six modules plasma - support catalytique, chaque support catalytique ayant une épaisseur de 6 mm et un dépôt constitué de Al₂ O₃ et Pt.

Ces deux exemples de dispositif de traitement conduisent à une même efficacité de traitement. Toutefois, un dispositif de traitement selon l'exemple 1 sera utilisé de préférence, puisque moins coûteux.

On va décrire à présent plus particulièrement une structure d'électrode permettant de générer un plasma dans chaque zone de génération de plasma 12, notamment en référence à la figure 2.

La génération d'un plasma dans une zone 12 peut être obtenue en disposant des électrodes de polarité opposée en vis-à-vis dans un plan sensiblement perpendiculaire à la direction X du flux gazeux.

Dans ce mode de réalisation, une première série d'électrodes rectilignes 13 et une seconde série d'électrodes rectilignes 14 de polarité opposée sont disposées alternativement dans la zone de génération de plasma 12.

Ainsi, les électrodes de polarité opposée sont réalisées sous la forme de deux peignes d'électrodes 13, 14 disposés en vis-à-vis et reliés chacun, à une borne opposée d'un générateur 15.

Chaque peigne d'électrodes comporte ainsi plusieurs doigts constituant des électrodes rectilignes 13, 14.

Chaque doigt 13, 14 est constitué d'une âme monobrin relativement rigide en matériau métallique conducteur électrique d'un diamètre suffisant, et par exemple de l'ordre de 0,8 mm. Cette âme est enrobée par un matériau diélectrique d'épaisseur préférentielle comprise entre 0,3 et 0,5 mm.

Cet enrobage peut être par exemple en silicone, en émail ou en tout autre matériau diélectrique non poreux.

Le matériau diélectrique forme ainsi une barrière diélectrique entre chaque électrode, permettant la génération d'un plasma de type "décharge à barrière diélectrique".

Ce type de plasma possède plusieurs avantages, et notamment celui d'être bien réparti au sein du mélange de gaz à traiter. En outre, la décharge à barrière diélectrique tolère des impulsions de tension de longue durée, sans formation d'un arc électrique, permettant l'utilisation d'un générateur électrique 15 relativement simplifié.

Comme bien illustré sur la figure 2, les électrodes 13, 14 de chaque peigne s'étendent parallèlement les unes aux autres sur une surface du plan correspondant sensiblement à la section de passage du flux gazeux.

Dans ce mode de réalisation, chaque peigne d'électrodes comporte ainsi sept électrodes rectilignes ou doigts. Le nombre d'électrodes 13, 14 utilisé est lié à la section de passage du flux gazeux et est choisi de manière à couvrir régulièrement l'intégralité de la section de passage

Les électrodes rectilignes 13, 14 de chaque peigne sont équidistantes les unes des autres. La distance séparant ainsi les électrodes 13, 14 doit être identique avec une tolérance faible, de l'ordre de 0,05 mm, de manière à obtenir un plasma uniformément réparti dans l'air de la zone de génération de plasma 12.

Par ailleurs, la distance séparant deux électrodes de polarité opposée, c'est-à-dire la distance séparant chaque électrode rectiligne 13 d'une électrode rectiligne 14, est comprise entre 3 et 5 mm, et de préférence sensiblement égale à 4 mm.

Grâce à cette faible distance séparant les électrodes de polarité opposée, la tension appliquée peut être faible, et par exemple inférieure à 20 kV mesurée crête à crête d'une tension sinusoïdale d'alimentation.

En pratique, les électrodes 13, 14 sont montées sur un même support 16, par exemple en résine thermoplastique ou thermodurcissable.

Les électrodes 13, 14 peuvent ainsi être noyées au niveau de leurs extrémités de raccordement 13a, 14a au générateur 15 dans le support 16.

Afin d'éviter tout risque de contournement électrique, il est important que l'extrémité libre 13b, 14b des électrodes 13, 14 soit à une distance suffisante de l'extrémité de raccordement 13a, 14a des électrodes de polarité opposée. Une distance de 10 mm peut être suffisante.

Dans le mode de réalisation illustré sur les figures, les électrodes 13, 14 de chaque peigne sont disposées alternativement dans un même plan, perpendiculaire à la direction X du flux gazeux.

Toutefois, afin de réduire les pertes de charge au niveau de la zone de génération de plasma 12, chaque série d'électrodes 13, 14 peut être disposée dans un plan différent, toujours perpendiculairement à la direction du flux gazeux. Ces plans sont alors décalés de quelques millimètres dans le sens du flux gazeux, et par exemple de 1 à 2 mm suivant la direction X.

Comme bien illustré sur la figure 1, le dispositif de traitement 10 est ainsi composé d'un empilement de support d'électrodes 16 constituant également des moyens de montage des supports catalytiques 11.

A cet égard, les supports d'électrodes 16 comportent des épaulements 16a qui, disposés en vis-à-vis, sont adaptés à loger un support catalytique 11.

Bien entendu, le dispositif de traitement 10 comporte également des supports simples 17 sans électrodes 13, 14 et destinés uniquement au montage d'un support catalytique 11 tout en formant entretoise pour ménager un espace entre chaque support catalytique 11 et éviter ainsi toute perte de charge dans la circulation du flux gazeux.

Le dispositif de traitement 10 comporte en outre à ses extrémités des éléments de raccordement 18, 19 permettant de raccorder le dispositif de traitement 17 à un conduit de circulation du flux gazeux.

L'empilement de ces différents supports 16, 17, 18, 19 doit permettre en outre d'assurer l'étanchéité aéraulique du dispositif car des fuites de gaz de cuisson provoqueraient la présence d'odeur et/ou d'ozone.

L'étanchéité entre ces différents supports 16, 17, 18, 19 peut être réalisée grâce à des joints toriques 20, l'empilage des supports étant maintenu par exemple au moyen de tiges filetées ou par un système de clipsage utilisant les caractéristiques élastiques de la résine constituant les différents supports 16, 17, 18, 19.

Alternativement, des lames métalliques maintenant l'empilage comprimé avec effet ressort peuvent être utilisées.

Grâce au dispositif de traitement conforme à l'invention, il est ainsi possible de réduire le coût de l'alimentation au niveau des électrodes de génération de plasma qui peuvent être disposées à faible distance les unes des autres. On augmente ainsi l'efficacité du plasma généré dans le dispositif de traitement.

Pour réduire les coûts de l'alimentation, une alimentation à résonance sinusoïdale peut être utilisée, la fréquence étant supérieure aux fréquences audibles.

D'autres types d'alimentation pourraient être utilisés, et par exemple une alimentation impulsionelle.

La génération de plasma directement en amont des supports catalytiques et combinée à la phase active de ces supports catalytiques permet de détruire efficacement les composés organiques volatils.

La diminution de la tension d'alimentation utilisée pour alimenter les électrodes de génération de plasma permet notamment de réduire le coût de la carte électronique d'alimentation.

Lorsque ce dispositif de traitement est raccordé à un conduit de circulation d'une hotte de filtration des fumées de cuisson, il permet de traiter efficacement tous les types de molécules odorantes présentes dans les fumées de cuisson avant de rejeter celles-ci dans l'air ambiant.

Bien entendu, de nombreuses modifications peuvent être apportées aux exemples de réalisation décrits précédemment sans sortir du cadre de l'invention.

## Revendications

1. Dispositif de traitement de gaz par catalyse comprenant au moins un support catalytique (11) adapté à être traversé par un flux gazeux et des électrodes (13, 14) de génération d'un plasma de décharge, **caractérisé en ce qu'**une zone de génération de plasma (12) comporte une première série d'électrodes rectilignes (13) et une seconde série d'électrodes rectilignes (14) de polarité opposée, disposées alternativement dans ladite zone de génération de plasma (12), ladite zone de génération de plasma (12) étant disposée en amont dudit support catalytique (11) suivant le sens du flux gazeux (F) et adjacente audit support catalytique (11).

2. Dispositif de traitement conforme à la revendication 1, **caractérisé en ce que** les électrodes (13, 14) desdites première et seconde séries sont disposées alternativement dans un même plan perpendiculaire à la direction du flux gazeux (F).

3. Dispositif de traitement conforme à la revendication 1, **caractérisé en ce que** la première série d'électrodes (13) et la seconde série d'électrodes (14) sont disposées respectivement dans deux plans différents perpendiculaires à la direction du flux gazeux (F) et distants de quelques millimètres.

4. Dispositif de traitement conforme à l'une des revendications 1 à 3, **caractérisé en ce que** les électrodes (13, 14) de chaque série sont équidistantes les unes des autres.

5. Dispositif de traitement conforme à l'une des revendications 1 à 4, **caractérisé en ce que** les électrodes (13, 14) de chaque série s'étendent parallèlement les unes aux autres sur une surface de plan correspondant sensiblement à la section de passage du flux gazeux (F).

6. Dispositif de traitement conforme à l'une des revendications 1 à 5, **caractérisé en ce que** la distance entre deux électrodes (13, 14) de polarité opposée est comprise entre 3 et 5 mm, et de préférence sensiblement égale à 4 mm.

7. Dispositif de traitement conforme à l'une des revendications 1 à 6, **caractérisé en ce qu'**il comprend plusieurs supports catalytiques (11) disposés successivement suivant le sens du flux gazeux (F).

8. Dispositif de traitement conforme à la revendication 7, **caractérisé en ce qu'**il comprend plusieurs zones de génération de plasma (12) disposées respectivement en amont de plusieurs supports catalytiques (11).

9. Dispositif de traitement conforme à la revendication 8, **caractérisé en ce que** lesdits supports catalytiques (11) sont d'épaisseurs différentes et de nature de catalyseur différente.

10. Hotte de filtration des fumées de cuisson, **caractérisée en ce qu'**elle comprend un dispositif de traitement conforme à l'une des revendications 1 à 9.

11. Système de climatisation **caractérisé en ce qu'**il comprend un dispositif de traitement conforme à l'une des revendications 1 à 9.

## Claims

1. Device for treating gas by catalysis, comprising at least one catalytic support (11) for having a gas flow pass through it and electrodes (13, 14) generating a discharge plasma, **characterised in that** a plasma generation zone (12) comprises a first series of rectilinear electrodes (13) and a second series of rectilinear electrodes (14) of opposite polarity, disposed alternately in said plasma generation zone (12), said plasma generation zone (12) being disposed upstream of said catalytic support (11) in the direction of the gaseous flow (F) and adjacent to said catalytic support.

2. Treatment device according to claim 1, **characterised in that** the electrodes (13, 14) of said first and second series are disposed alternately in the same plane perpendicular to the direction of the gaseous flow (F).

3. Treatment device according to claim 1, **characterised in that** the first series of electrodes (13) and the second series of electrodes (14) are disposed respectively in two different planes perpendicular to the direction of the gaseous flow (F) and distant by a few millimetres.

4. Treatment device according to one of claims 1 to 3, **characterised in that** the electrodes (13, 14) in each series are equidistant from one another.

5. Treatment device according to one of claims 1 to 4, **characterised in that** the electrodes (13, 14) in each series extend parallel to one another on a flat surface corresponding substantially to the cross section of passage of the gaseous flow (F).

6. Treatment device according to one of claims 1 to 5, **characterised in that** the distance between two electrodes (13, 14) of opposite polarity is between 3 and 5 mm, and preferably substantially equal to 4 mm.

7. Treatment device according to one of claims 1 to 6, **characterised in that** it comprises several catalytic supports (11) disposed successively in the direction of the gaseous flow (F).

8. Treatment device according to claim 7, **characterised in that** it comprises several plasma generation zones (12) disposed respectively upstream of several catalytic supports (11).

9. Treatment device according to claim 8, **characterised in that** said catalytic supports (11) have different thicknesses and different natures of catalyst.

10. Hood for filtering cooking fumes, **characterised in that** it comprises a treatment device according to one of claims 1 to 9.

11. Air conditioning system, **characterised in that** it comprises a treatment device according to one of claims 1 to 9.

## Patentansprüche

1. Vorrichtung zur Behandlung von Gasen durch Katalyse, mit mindestens einem katalytischen Träger (11), der dazu geeignet ist, von einer Gasströmung durchströmt zu werden, und mit Elektroden (13, 14) zur Erzeugung eines Entladungsplasmas, **dadurch gekennzeichnet, dass** ein Plasmaerzeugungsbereich (12) eine erste Reihe von geraden Elektroden (13) und eine zweite Reihe von geraden Elektroden (14) mit entgegengesetzter Polarität aufweist, die abwechselnd in dem Plasmaerzeugungsbereich (12) angeordnet sind, wobei der Plasmaerzeugungsbereich (12) in Richtung der Gasströmung (F) vor dem katalytischen Träger (11) und angrenzend an den katalytischen Träger (11) angeordnet ist.

2. Behandlungsvorrichtung nach Anspruch 1, **dadurch gekennzeichnet, dass** die Elektroden (13, 14) der ersten und der zweiten Reihe abwechselnd in ein und derselben Ebene angeordnet sind, die senkrecht zur Richtung der Gasströmung (F) verläuft.

3. Behandlungsvorrichtung nach Anspruch 1, **dadurch gekennzeichnet, dass** die erste Reihe Elektroden (13) und die zweite Reihe Elektroden (14) jeweils in zwei verschiedenen Ebenen angeordnet sind, die senkrecht zur Richtung der Gasströmung (F) verlaufen und um einige Millimeter voneinander beabstandet sind.

4. Behandlungsvorrichtung nach einem der Ansprüche 1 bis 3, **dadurch gekennzeichnet, dass** die Elektroden (13, 14) jeder Reihe den gleichen Abstand zueinander haben.

5. Behandlungsvorrichtung nach einem der Ansprüche 1 bis 4, **dadurch gekennzeichnet, dass** die Elektroden (13, 14) jeder Reihe auf einer Ebenenfläche, die im Wesentlichen dem Durchlassquerschnitt der Gasströmung (F) entspricht, parallel zueinander verlaufen.

6. Behandlungsvorrichtung nach einem der Ansprüche 1 bis 5, **dadurch gekennzeichnet, dass** der Abstand zwischen zwei Elektroden (13, 14) mit entgegengesetzter Polarität zwischen 3 und 5 mm und vorzugsweise im Wesentlichen 4 mm beträgt.

7. Behandlungsvorrichtung nach einem der Ansprüche 1 bis 6, **dadurch gekennzeichnet, dass** sie mehrere katalytische Träger (11) aufweist, die in Richtung der Gasströmung (F) nacheinander angeordnet sind.

8. Behandlungsvorrichtung nach Anspruch 7, **dadurch gekennzeichnet, dass** sie mehrere Plasmaerzeugungsbereiche (12) aufweist, die jeweils vor mehreren katalytischen Trägern (11) angeordnet sind.

9. Behandlungsvorrichtung nach Anspruch 8, **dadurch gekennzeichnet, dass** die katalytischen Träger (11) unterschiedliche Dicken haben und unterschiedlicher Katalysatorart sind.

10. Abzug zum Filtern der Kochdünste, **dadurch gekennzeichnet, dass** er eine Behandlungsvorrichtung nach einem der Ansprüche 1 bis 9 aufweist.

11. Klimatisierungssystem, **dadurch gekennzeichnet, dass** es eine Behandlungsvorrichtung nach einem der Ansprüche 1 bis 9 aufweist.
